# EUROPEAN PATENT APPLICATION

(11) **EP 4 585 390 A1**
(43) Date of publication of application: **16.07.2025**
(21) Application number: 25151278.6
(22) Date of filing: 10.01.2025
(51) Int. Cl.: B29C 45/76, B29C 45/77, B29C 45/00

(54) **INJECTION MOLDING MACHINE AND CLAMPING FORCE VARIATION ADJUSTMENT METHOD OF INJECTION MOLDING MACHINE**

(30) Priority: 10.01.2024 JP 2024001936
(71) Applicant: Toyo Machinery & Metal Co., Ltd., Akashi-shi, Hyogo 674-0091 (JP)
(72) Inventor: Sawada, Yasutake, Akashi-shi (JP)
(74) Representative: Schön, Christoph

(57) **Abstract**

An injection molding machine includes: a clamping device having a fixed mold and a movable mold, configuring a mold, and a clamping force sensor to detect a clamping force of the movable mold to the fixed mold; an injection device having an injection nozzle and a screw to fill the mold with a molten resin via the injection nozzle; and a control device, wherein the control device monitors a variation of the clamping force from the clamping force sensor, causes a slow speed forward movement time at a timing of VP switching to be increased if the variation exceeds a predetermined upper limit, and causes the slow speed forward movement time at the timing of VP switching to be reduced if the variation falls below a predetermined lower limit.

## Description

### BACKGROUND OF THE INVENTION

### Field of the Invention

The present invention relates to an injection molding machine having a clamping force adjustment device and a clamping force variation adjustment method of an injection molding machine.

### Description of the Related Art

From the past, methods of adjusting a clamping force in injection molding machines are developed (e.g., PTL 1).

PTL 1 discloses that, for molding by clamping a mold in an injection molding machine, the clamping force of a mold is adjusted based on the mold displacement detected using a mold gap detection sensor, the injection peak pressure on the injection molding machine side, and the most forward injection position to perform molding by an adequate clamping force capable of reducing energy for clamping without causing burr defects.

PTL 1 refers to JP 2021-045938A.

### SUMMARY OF THE INVENTION

However, the injection molding machine disclosed in PTL 1 adjusts the clamping force by changing basic conditions of the injection molding fundamentals, such as the injection peak pressure and the most forward injection position, and thus has a risk of another problem, even if burr defects can be avoided, because of the large degree of influence exerted on the entire injection molding.

The present invention has been made in view of these problems, and one or more embodiments thereof provide an injection molding machine having a low possibility leading to another molding defect even when a clamping force is adjusted, being capable of immediately handling variation of the clamping force, and being less likely to cause a difference depending on a person even when a person who sets the injection molding machine is changed and a clamping force variation adjustment method of an injection molding machine.

An aspect of the present invention provides an injection molding machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
   monitors a variation of the clamping force from the clamping force sensor,
   causes a slow speed forward movement time at a timing of VP switching to be increased if the variation exceeds a predetermined upper limit, and
   causes the slow speed forward movement time at the timing of VP switching to be reduced if the variation falls below a predetermined lower limit.

Another aspect of the present invention provides an injection molding machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
   monitors a variation of the clamping force from the clamping force sensor,
   causes a dwell screw speed to be reduced if the variation exceeds a predetermined upper limit, and
   causes the dwell screw speed to be increased if the variation falls below a predetermined lower limit.

Still another aspect of the present invention provides an injection molding machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
   monitors a variation of the clamping force from the clamping force sensor,
   causes a VP switching position to be moved to a position far from the injection nozzle if the variation exceeds a predetermined upper limit, and
   causes the VP switching position to be moved to a position close to the injection nozzle if the variation falls below a predetermined lower limit.

Still another aspect of the present invention provides a clamping force variation adjustment method of an injection molding machine, the machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
   monitors a variation of the clamping force from the clamping force sensor,
   causes a slow speed forward movement time at a timing of VP switching to be increased if the variation exceeds a predetermined upper limit, and
   causes the slow speed forward movement time at the timing of VP switching to be reduced if the variation falls below a predetermined lower limit.

Still another aspect of the present invention provides a clamping force variation adjustment method of an injection molding machine, the machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
   monitors a variation of the clamping force from the clamping force sensor,
   causes a dwell screw speed to be reduced if the variation exceeds a predetermined upper limit, and
   causes the dwell screw speed to be increased if the variation falls below a predetermined lower limit.

Still another aspect of the present invention provides a clamping force variation adjustment method of an injection molding machine, the machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
   monitors a variation of the clamping force from the clamping force sensor,
   causes a VP switching position to be moved to a position far from the injection nozzle if the variation exceeds a predetermined upper limit, and
   causes the VP switching position to be moved to a position close to the injection nozzle if the variation falls below a predetermined lower limit.

The injection molding machine and the clamping force variation adjustment method of an injection molding machine according to the present invention causes the variation of the clamping force to be in a predetermined range by adjusting the "slow speed forward movement" time, the "dwell screw speed", and the "VP switching position", and thus has a low possibility of leading to another molding defect as in the case of directly adjusting the clamping force, is capable of immediately handling variation of the clamping force, and is less likely to cause a difference depending on a person even when the person who sets the injection molding machine is changed.

### BRIEF DESCRIPTION OF THE DRAWINGS

FIG. 1 is a diagram illustrating an example of an injection molding machine 10 according to an embodiment.
FIG. 2 is a flowchart illustrating first handling by a control device 15 of the injection molding machine 10 according to this embodiment.
FIG. 3 is a flowchart illustrating second handling by the control device 15 of the injection molding machine 10 according to this embodiment.
FIG. 4 is a flowchart illustrating third handling by the control device 15 of the injection molding machine 10 according to this embodiment.

### DETAILED DESCRIPTION OF THE INVENTION

### Configuration of injection Molding Machine 10

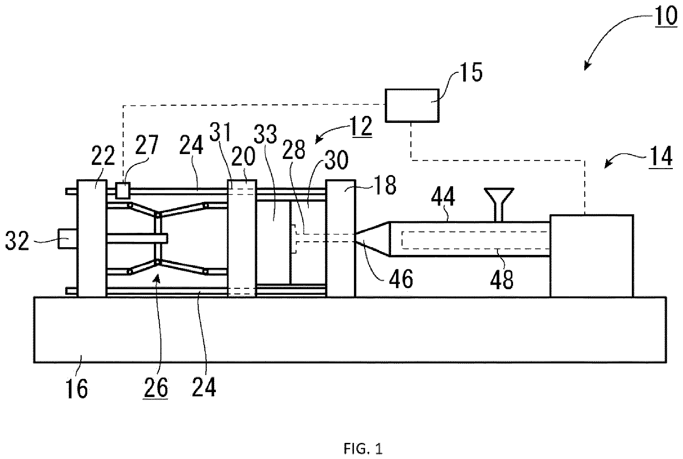

The injection molding machine 10 according to the present embodiment is a machine that repeats a molding cycle, such as mold closing, clamping, injection and filling of a molten resin, measurement, mold opening, and ejection of a molded article, to produce molded articles, and as illustrated in FIG. 1, roughly includes a clamping device 12, an injection device 14, and the control device 15.

The clamping device 12 includes a base 16, a fixed plate 18, a movable plate 20, a pressure receiving plate 22, a tie bar 24, a toggle mechanism 26, and a clamping force sensor 27.

The base 16 is a member to be a foundation of other members configuring the clamping device 12 and the injection device 14.

The fixed plate 18 is fixed on the base 16, and to the fixed plate 18, a fixed mold 30 configuring a mold 28 is attached.

The movable plate 20 is a member to slide on the base 16 so as to move close to and away from the fixed plate 18, and to the movable plate 20, a movable mold 33 configuring the mold 28 is attached. The movable mold 33 contacts the fixed mold 30 to form a cavity to be filled with a molten resin.

The pressure receiving plate 22 is a member fixed on the base 16 on the opposite side to the fixed plate 18 viewed from the movable plate 20.

The tie bar 24 is a rod member having an end fixed to the fixed plate 18 and the other end fixed to the pressure receiving plate 22. The tie bar 24 is also inserted through a tie bar insertion hole 31 formed in the movable plate 20 arranged between the fixed plate 18 and the pressure receiving plate 22. This allows the movable plate 20 to slide on the base 16 in a left-right direction in FIG. 1 along the tie bar 24. It should be noted that the tie bar 24 to be used includes a plurality (e.g., four) of tie bars.

The toggle mechanism 26 is a mechanism to cause the movable plate 20 to move close to and away from the fixed plate 18, and a clamp driving device 32 is attached to the pressure receiving plate 22.

The movable plate 20 moves along the tie bar 24 (moves in the left-right direction in FIG. 1) by transmission of a driving force of the clamp driving device 32 through the toggle mechanism 26. When the movable plate 20 moves in the left direction, the movable mold 33 is separated from the fixed mold 30. Meanwhile, when the movable plate 20 moves in the right direction, the movable mold 33 abuts on the fixed mold 30 to form a cavity (internal space) inside the mold 28. Then, when further adding a pressure in the direction of moving the movable plate 20 in the right direction, the fixed mold 30 and the movable mold 33 are clamped.

The clamping force sensor 27 is a sensor to measure the clamping force of the movable mold 33 to the fixed mold 30 and is attached to at least one of the tie bars 24. Specifically, the clamping force sensor 27 measures the strain of the tie bar 24 during clamping to cause the control device 15 to calculate the clamping force based on the amount of strain.

The injection device 14 is a device to inject a molten resin to fill the mold (hollow) 28 formed by the movable mold 33 contacting the fixed mold 30, and has a heating cylinder 44 around which a heater is arranged and an injection nozzle 46 with a distal end abutting on the mold 28. In the heating cylinder 44, a screw 48 is stored that feeds a molten resin to the injection nozzle 46.

### Characteristic Control by Control Device 15

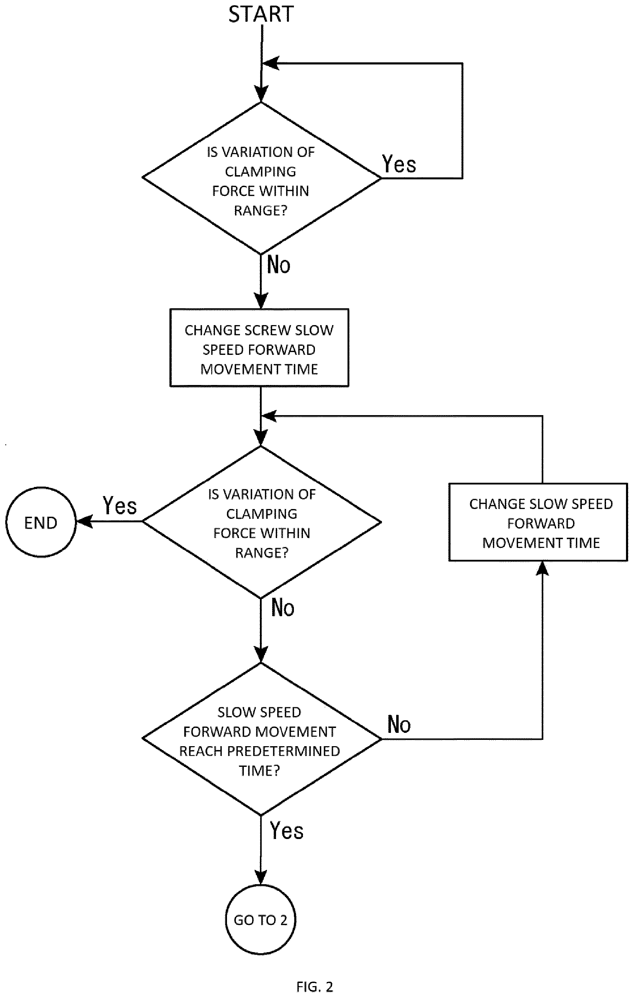

Although the control device 15 is a device to control the entire molding cycle by the injection molding machine 10, a description is given below only to characteristic control by the injection molding machine 10 according to the present embodiment (refer to FIG. 2).

While repeating a molding cycle by the injection molding machine 10, the control device 15 continuously monitors a variation of the clamping force calculated using a strain amount signal from the clamping force sensor 27 during "clamping" through "injection and filling of molten resin" in the previous molding cycle.

If the variation of the clamping force under monitoring is in a predetermined range (e.g., if the clamping force is set to be 1,000 kN, after clamping at 1,000 kN, variation of the clamping force with an internal pressure rise of the mold while being filled with a molten resin is in a range of 10 kN or more and 50 kN or less), the control device 15 repeats the same molding cycle as the previous cycle without special operation. It should be noted that the variation of the clamping force may be monitored not only during injection and filling of the molten resin but also during clamping or may be monitored during either one period of them.

If the variation of the clamping force under monitoring exceeds the predetermined range, the control device 15 is designed to perform first handling.

### First Handling

Normally, to fill the mold 28 with a molten resin by the injection device 14, the mold 28 is designed to be filled with a predetermined amount of a molten resin by moving the screw 48 of the injection device 14 forward by a predetermined length, and after the forward movement, dwell operation is designed to be performed by operating the screw 48 to cause the inside of the mold 28 to be at a predetermined pressure value. It should be noted that the position and timing of switching between forward movement operation and dwell operation of the screw 48 are referred to as "VP switching".

In this case, if the variation of the clamping force under monitoring exceeds a predetermined upper limit, the control device 15 increases "slow speed forward movement" in the last phase of the forward movement operation 0.5 seconds, for example, and then performs the dwell operation (e.g., if a slow speed forward movement time of the screw 48 is 0 s, the slow speed forward movement time is set to be 0.5 s). It should be noted that the speed of the forward movement operation of the screw 48 is, for example, from 10 to 300 mm/s and the speed for the slow speed forward movement is, for example, 0.1 mm/s.

The control device 15 thus checks the variation of the clamping force during the first handling, and if the variation is in the predetermined range, the control device 15 subsequently performs the next molding cycle using the previous "slow speed forward movement" time.

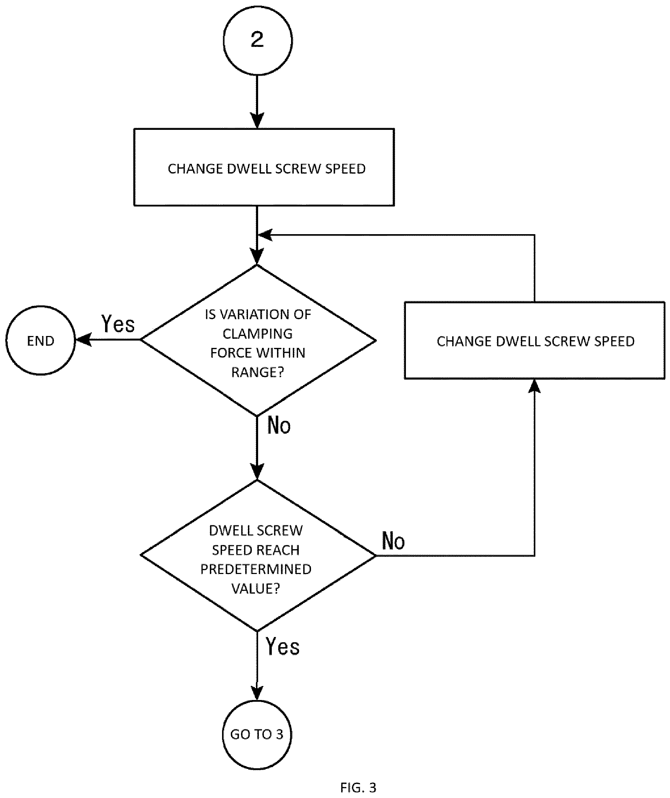

If the variation still exceeds the predetermined upper limit, the control device 15 further increases the "slow speed forward movement" time (e.g., to 1.0 second) and performs the next molding cycle. If the variation of the clamping force still exceeds the predetermined upper limit even after the "slow speed forward movement" time is increased, the control device 15 continues even more increase in the "slow speed forward movement" time. Then, when the "slow speed forward movement" reaches a predetermined time (e.g., 2.0 seconds), the control device 15 performs second handling (refer to FIG. 3).

### Second Handling

As described earlier, after the VP switching, the dwell operation is performed by operating the screw 48 to cause the inside of the mold 28 to be at the predetermined pressure value, and when the "slow speed forward movement" reaches a predetermined time (e.g., 2.0 seconds) in the first handling, the control device 15 causes the forward movement speed ("dwell screw speed") of the screw 48 during the dwell operation to be reduced as the second handling in continuation of the first handling described earlier. For example, given the forward movement speed of the screw 48 of 20 mm/s for the normal dwell operation, the forward movement speed of the screw 48 is reduced to 15 mm/s.

The control device 15 thus checks the variation of the clamping force during the second handling, and if the variation is in the predetermined range, the control device 15 subsequently performs the next molding cycle using the previous "dwell screw speed".

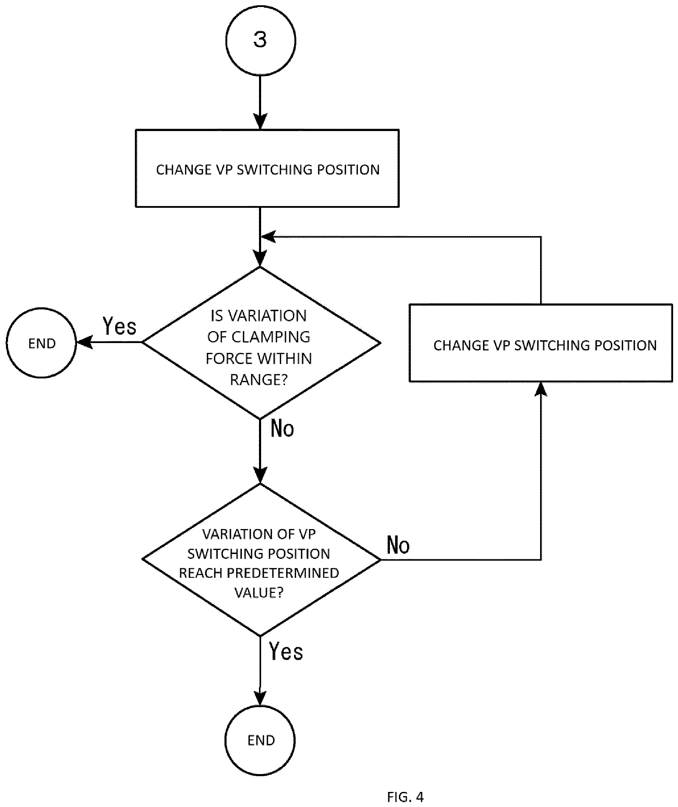

If the variation still exceeds the predetermined upper limit, the control device 15 further reduces the "dwell screw speed" (e.g., to 10 mm/s) and performs the next molding cycle. If the variation of the clamping force still exceeds the predetermined upper limit even after the "dwell screw speed" is reduced, the control device 15 continues even more reduction in the "dwell screw speed". Then, when the "dwell screw speed" reaches a predetermined value (e.g., 1 mm/s), the control device 15 performs third handling (refer to FIG. 4).

### Third Handling

When the "dwell screw speed" reaches a predetermined value (e.g., 1 mm/s) in the second handling, the control device 15 changes the position of the screw 48 for VP switching ("VP switching position") as the third handling in continuation of the second handling described earlier. For example, given the normal VP switching position of 10 mm, the VP switching position is changed + 1 mm (the screw 48 is changed to a position 1 mm far from the injection nozzle 46). This causes a change in the amount of a molten resin to be put in the mold 28.

The control device 15 thus checks the variation of the clamping force during the third handling, and if the variation is in the predetermined range, the control device 15 subsequently performs the next molding cycle using the previous "VP switching position".

If the variation still exceeds the predetermined upper limit, the control device 15 causes the "VP switching position" to be moved to a position even farther from the injection nozzle 46 (e.g., to + 2 mm) and performs the next molding cycle. If the variation of the clamping force still exceeds the predetermined upper limit even after the "VP switching position" is even more changed, the control device 15 continues movement of the "VP switching position" to a position even farther from the injection nozzle 46. Then, when the amount of movement of the "VP switching position" reaches a predetermined value (e.g., + 5 mm), the control device 15 finishes the handling.

### The Case where Variation of Clamping Force Falls Below Predetermined Lower Limit

On the contrary to the above description, if the variation of the clamping force under monitoring falls below a predetermined lower limit, the control device 15 causes the "slow speed forward movement" time to be reduced (e.g., reduced from 0.5 seconds to 0.4 seconds) and performs the next molding cycle (first handling). If the variation of the clamping force still falls below the predetermined lower limit even after the "slow speed forward movement" time is reduced, the control device 15 continues reduction in the "slow speed forward movement" time. Then, when the "slow speed forward movement" reaches a predetermined time (e.g., 0 seconds), the control device 15 performs the second handling.

If the variation of the clamping force still falls below the predetermined lower limit even after the "slow speed forward movement" time is reduced, the control device 15 causes the "dwell screw speed" to be increased (e.g., increased from 15 mm/s to 17 mm/s) and performs the next molding cycle (second handling). If the variation of the clamping force still falls below the predetermined lower limit even after the "dwell screw speed" is increased, the control device 15 continues increase in the "dwell screw speed". Then, when the "dwell screw speed" reaches a predetermined speed (e.g., 40 mm/s), the control device 15 performs the third handling.

When the "dwell screw speed" reaches a predetermined speed (e.g., 40 mm/s) in the second handling, the control device 15 changes the position of the screw 48 for VP switching ("VP switching position") as the third handling in continuation of the second handling described earlier. For example, given the normal VP switching position of 10 mm, the VP switching position is changed - 1 mm (the screw 48 is in a position 1 mm close to the injection nozzle 46).

If the variation still falls below the predetermined lower limit, the control device 15 causes the "VP switching position" to be moved to a position even closer to the injection nozzle 46 (e.g., moved to a position - 2 mm closer) and performs the next molding cycle. If the variation of the clamping force still falls below the predetermined lower limit even after the "VP switching position" is even more changed, the control device 15 continues movement of the "VP switching position". Then, when the amount of movement of the "VP switching position" reaches a predetermined value (e.g., - 5 mm), the control device 15 finishes the handling.

As just described, the injection molding machine 10 according to the present embodiment has the variation of the clamping force in the predetermined range by adjusting the "slow speed forward movement" time, the "dwell screw speed", and the "VP switching position", and thus has a low possibility of leading to another molding defect as in the case of directly adjusting the clamping force, is capable of immediately handling the variation of the clamping force, and is less likely to cause a difference depending on a person even when a person who sets the injection molding machine is changed.

### First Modification

If the variation of the clamping force is still out of the predetermined range even after the "third handling" described above is performed, the clamping force may be changed. For example, the attachment position of the movable plate 20 to the toggle mechanism 26 is moved to cause the movable plate 20 to be closer to the fixed plate 18 (to increase the clamping force), or in contrast, causes the movable plate 20 to be farther from the fixed plate 18 (to reduce the clamping force).

### Second Modification

Although the clamping force sensor 27 is attached to the tie bar 24 in the injection molding machine 10 according to the embodiment described above, the clamping force sensor 27 may be attached to a different position as long as the position allows measurement of the clamping force.

### Third Modification

Although the first handling, the second handling, and the third handling are applied in this order in the injection molding machine 10 according to the embodiment described above, each handling may be applied in a different order, and moreover, any one or two of the handlings may be applied.

The one or more embodiments and modifications of the present disclosure are to be considered in all respects as illustrative, and not restrictive. The scope of the present invention is indicated by the appended claims rather than by the foregoing description and is intended to include all modifications in the meaning and scope equivalent to the claims.

## Claims

1. An injection molding machine comprising:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
monitors a variation of the clamping force from the clamping force sensor,
causes a slow speed forward movement time at a timing of VP switching to be increased if the variation exceeds a predetermined upper limit, and
causes the slow speed forward movement time at the timing of VP switching to be reduced if the variation falls below a predetermined lower limit.

2. An injection molding machine comprising:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
monitors a variation of the clamping force from the clamping force sensor,
causes a dwell screw speed to be reduced if the variation exceeds a predetermined upper limit, and
causes the dwell screw speed to be increased if the variation falls below a predetermined lower limit.

3. An injection molding machine comprising:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
monitors a variation of the clamping force from the clamping force sensor,
causes a VP switching position to be moved to a position far from the injection nozzle if the variation exceeds a predetermined upper limit, and
causes the VP switching position to be moved to a position close to the injection nozzle if the variation falls below a predetermined lower limit.

4. A clamping force variation adjustment method of an injection molding machine, the machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
monitors a variation of the clamping force from the clamping force sensor,
causes a slow speed forward movement time at a timing of VP switching to be increased if the variation exceeds a predetermined upper limit, and
causes the slow speed forward movement time at the timing of VP switching to be reduced if the variation falls below a predetermined lower limit.

5. A clamping force variation adjustment method of an injection molding machine, the machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
monitors a variation of the clamping force from the clamping force sensor,
causes a dwell screw speed to be reduced if the variation exceeds a predetermined upper limit, and
causes the dwell screw speed to be increased if the variation falls below a predetermined lower limit.

6. A clamping force variation adjustment method of an injection molding machine, the machine including:
a clamping device having a fixed mold and a movable mold, configuring a mold, and a clamping force sensor to detect a clamping force of the movable mold to the fixed mold;
an injection device having an injection nozzle and a screw to fill the mold with a molten resin via the injection nozzle; and
a control device, wherein
the control device
monitors a variation of the clamping force from the clamping force sensor,
causes a VP switching position to be moved to a position far from the injection nozzle if the variation exceeds a predetermined upper limit, and
causes the VP switching position to be moved to a position close to the injection nozzle if the variation falls below a predetermined lower limit.
